# EUROPÄISCHE PATENTSCHRIFT

(11) **EP 0 678 465 B1**
(45) Veröffentlichungstag und Bekanntmachung des Hinweises auf die Patenterteilung: **17.11.1999**
(21) Anmeldenummer: 95105592.0
(22) Anmeldetag: 13.04.1995
(51) Int. Cl.: B65G 65/46

(54) **Behälter für Schüttgüter und zähflüssige Güter**
Container for bulk and viscous material
Conteneur pour matières en vrac et matières visqueuses

(30) Priorität: 20.04.1994 DE 4413699
(43) Veröffentlichungstag der Anmeldung: 25.10.1995
(73) Patentinhaber: MAGEBA Handels- und Dientstleistungs-GmbH, D-98553 Erlau (DE)
(72) Erfinder: Baisch, Georg, D-72818 Trochtelfingen (DE)
(74) Vertreter: Möbus, Rudolf, Dipl.-Ing.

(56) Entgegenhaltungen:
- EP-A- 0 334 265
- US-A- 2 633 255
- US-A- 4 078 685
- US-A- 4 144 655

## Beschreibung

Die Erfindung betrifft einen Behälter für Schüttgüter und zähflüssige Güter mit einem im unteren Bereich im wesentlichen V-förmigen Querschnitt, einer ersten Fördereinrichtung am Boden des Behälters, um das Gut auf eine Behälterseite zu fördern, und einer zweiten Fördereinrichtung auf dieser Behälterseite, um das Gut zu einem weiter oben gelegenen Auslaß zu fördern. Übliche Behälter für Schüttgüter und zähflüssige Güter sind meist zylindrokonische Tanks mit einem Auslaß am untersten Ende des Konus. Derartige Tanks werden auf Füßen aufgestellt, damit der Auslaß frei zugänglich ist. Diese Behälter haben meist so große Abmessungen, daß sie nur im Freien aufstellbar sind. Wenn sie jedoch so klein hergestellt werden, daß sie in Räumen aufgestellt werden können, nehmen sie nur eine relativ geringe Füllmenge auf.

Aus der US-A-4 144 655 ist ein transportabler Speicherbehälter für Saatkörner bekannt, der in seinem Inneren zwischen zwei hintereinander parallel angeordneten Förderschnecken eine seitwärts schräg nach oben stehende Förderschnecke aufweist. Ferner ist aus der US-A-2 633 255 eine 2-Schnecken-Fördereinrichtung vorbekannt, die auch eine vertikal angeordnete Förderschnecke besitzt. Bei all diesen vorbekannten Vorrichtungen ist jedoch ein $tau des Fördergutes am Übergang von einer Fördereinrichtung zur nächsten Fördereinrichtung konstruktiv nicht ausgeschlossen. Außerdem kann sich bei diesem Behälter ein inhomogenes Schüttgut beim Befüllen entmischen.

Der Erfindung liegt die Aufgabe zugrunde, einen gattungsgemäßen Behälter so auszubilden, daß er in Räumen mit geringer Deckenhöhe aufstellbar ist, einen Stau am Übergang von einer Fördereinrichtung zur nächsten Fördereinrichtung vermeidet und ein Entmischen inhomogener Schüttgüter verhindert.

Gelöst wird die Aufgabe mit einem Behälter mit den Merkmalen des Anspruchs 1.

Wenn Schüttgutbehälter mit Materialien befüllt werden, deren Partikel einen Durchmesser aufweisen, der größer ist als 2 mm, besteht die Gefahr des Entmischens. D. h. beim Befüllen entsteht ein Kegel, in dessen Zentrum sich die Partikel mit kleinerem Durchmesser sammeln und auf dessen schräger Oberfläche größere Partikel in den Randbereich des Kegels rollen. Daher ist der erfindungsgemäße Behälter in seinem Inneren mit im wesentlichen senkrechten Platten versehen, die ein Entmischen des Schüttguts beim Befüllen des Behälters verhindern.

Ein derartiger Behälter kann in Räumen mit geringer Deckenhöhe aufgestellt werden und nimmt weit mehr Volumen auf als beispielsweise ein zylindrokonischer Tank. Bei einer vorgegebenen Behälterhöhe kann das Volumen des Behälters dadurch gesteigert werden, daß der Behälter um ein Vielfaches länger als hoch ist. Obwohl der Behälter ohne Füße direkt am Boden steht, kann aus ihm Gut entnommen werden, das neben dem Behälter in ein am Boden stehendes Behältnis, wie etwa eine Misch- und Förderanlage, fällt.

Die spezielle Ausgestaltung des Behälters erlaubt ein vollständiges Entleeren über einen einzigen Auslaß.

Die Behälterform eignet sich vor allem für Räume mit niedrigen Deckenhöhen und für den Tunnelbau.

Als Fördereinrichtung sind Förderschnecken besonders geeignet, da sie unkompliziert sind und nur wenig Raum benötigen.

Durch unterschiedliche Geschwindigkeiten der Fördereinrichtung und bei Förderschnecken auch durch unterschiedliche Steigungen der Schnecken wird erreicht, daß die erste Fördereinrichtung eine geringere Förderleistung hat als die zweite Fördereinrichtung. Die unterschiedlichen Förderleistungen verhindern, daß sich am Beginn der zweiten Fördereinrichtung ein Stau bildet, der zu einem Blockieren der Einrichtung führen könnte.

Direkt oberhalb der ersten Fördereinrichtung kann ein Staukörper vorgesehen werden, um den Druck des Gutes auf die Fördereinrichtung zu bremsen. Ein derartiger Staukörper kann aus einem einfachen, waagrecht liegenden Blech bestehen, das so oberhalb der Fördereinrichtung angeordnet ist, daß zwischen seinen Seiten und der Behälterwand das Gut zur Fördereinrichtung gelangen kann. Ein dachförmiger Staukörper oberhalb der Fördereinrichtung verhindert, daß ein Teil des Gutes im Behälter auf dem Staukörper liegenbleibt.

Zum gleichmäßigen Befüllen des Behälters können an seiner Oberseite mehrere Öffnungen vorgesehen sein. Diese Öffnungen sind vorzugsweise so groß gestaltet, daß eine Person durch sie in den Behälter einsteigen kann, um den Behälter zu reinigen oder zu reparieren.

Für den einfacheren Transport kann der Behälter in einem Rahmen angeordnet sein, der Vorrichtungen zur Befestigung von Seilen oder Ketten aufweist. Eine oder mehrere Rollen im unteren Bereich des Rahmens erleichtern das Verschieben des Behälters auf dem Boden.

Ein Ausführungsbeispiel ist in den Zeichnungen dargestellt und wird im folgenden näher beschrieben.

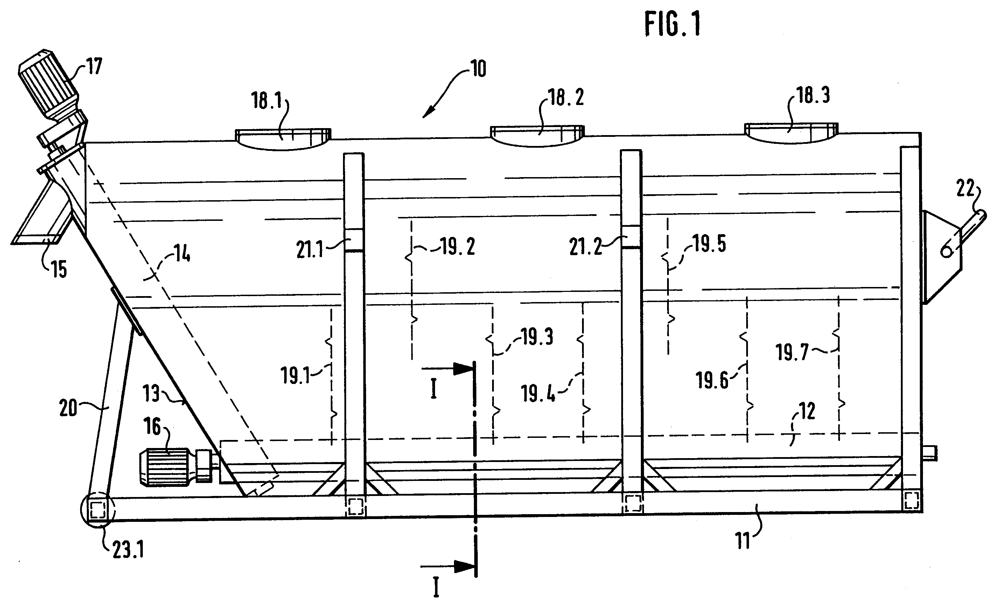

Es zeigen
- Fig. 1: eine Seitenansicht des Behälters;
- Fig. 2: eine Vorderansicht des Behälters;
- Fig. 3: eine Hinteransicht des Behälters;
- Fig. 4: einen Teil eines Schnitts durch den Behälter längs der Linie I-I in Fig. 1.

Der Behälter 10 ist etwa dreimal so lang wie hoch und ist an seiner Vorderseite so abgeschrägt, daß der Behälter an seiner Unterseite kürzer ist als an seiner Oberseite. Am Boden 11 des Behälters 10 befindet sich eine erste Förderschnecke 12, und an der schrägen Behälterseite 13 befindet sich eine zweite Förderschnecke 14. Die erste Förderschnecke 12 am Boden 11 des Behälters 10 fördert das Gut zur Behälterseite 13. An ihrem Ende weist diese Förderschnecke 12 sogenannte Mischpaddel auf, die das Material vorwärtstreiben und gleichzeitig auflockern. Von dort wird das Material durch die zweite Förderschnecke 14 nach oben befördert. Am Ende der zweiten Förderschnecke 14 befindet sich ein Auslaß 15. Die Förderschnecken 12 und 14 werden von Motoren 16 bzw. 17 angetrieben. Der Motor 16 liegt unterhalb der Behälterseite 13 und der Motor 17 oberhalb des Auslasses 15. Um einen Schüttgutstau im Bereich der Übergabe des Gutes von der ersten Förderschnecke 12 auf die zweite Förderschnecke 14 zu vermeiden, ist die zweite Förderschnecke 14 mit einer höheren Geschwindigkeit oder größeren Steigung als die erste Förderschnecke 12 versehen.

An seiner Oberseite hat der Behälter drei öffnungen 18.1, 18.2, 18.3, über die er befüllt werden kann und die so groß gehalten sind, daß eine Person durch sie in den Behälter hineinsteigen kann.

Beim Befüllen des Behälters durch die öffnungen 18.1, 18.2, 18.3 gelangt das Gut in den Behälter, wo es normalerweise einen Schüttgutkegel ausbilden würde. Die Ausbildung eines derartigen Kegels wird durch senkrechte Platten 19.1 bis 19.7 im Behälterinneren verhindert.

An seiner Außenseite hat der Behälter 10 einen Rahmen 20, an dem Befestigungsvorrichtungen wie Haken 21.1, 21.2 und der Bügel 22 vorgesehen sind. Zwei Rollen 23.1 und 23.2 (nicht zu sehen) sind am Rahmen 20 unterhalb der schrägen Behälterseite 13 vorgesehen. Wenn der Behälter an der gegenüberliegenden Seite leicht angehoben wird, kann er mittels dieser Rollen 23.1, 23.2 auf dem Boden entlanggerollt werden.

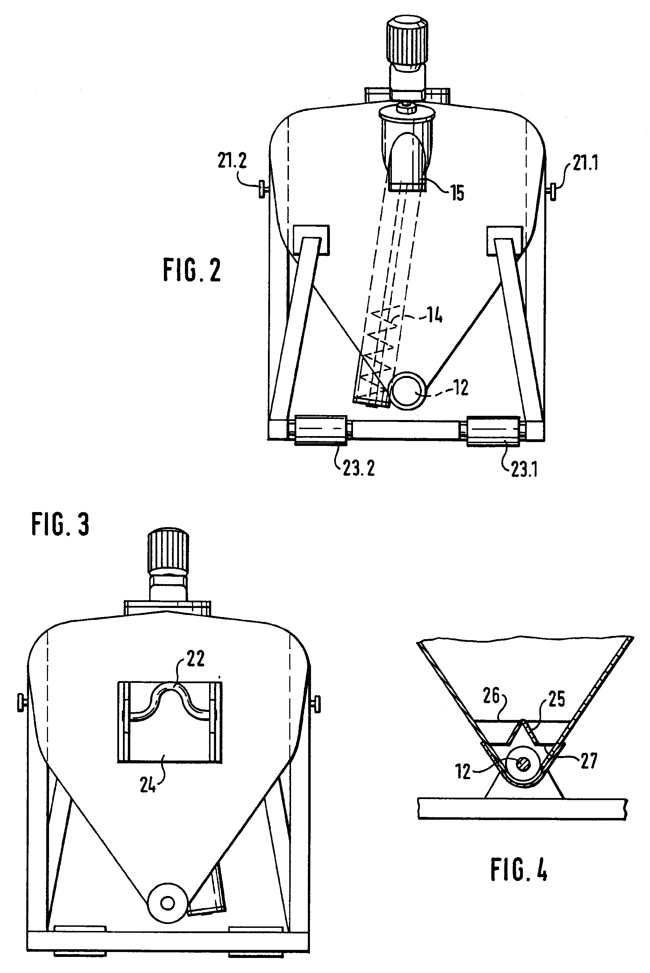

In Fig. 2 ist die V-förmige Querschnittsform des Behälters in seinem unteren Bereich gut zu erkennen. Am tiefsten Punkt dieses V-förmigen Querschnitts liegt die erste Schnecke 12. Am vorderen Ende der Schnecke 12 beginnt an der Seite der Schnecke 12 die zweite Schnecke 14, mit der das Gut zum Auslaß 15 befördert wird. Außerdem ist in Fig. 2 der Behälterrahmen 20 mit den Rollen 23.1, 23.2 und den Haken 21.1, 21.2 gut zu erkennen.

Fig. 3 zeigt die Rückseite des Behälters mit dem Bügel 22, der an einer Platte 24 etwa in der Mitte der Behälterrückseite befestigt ist.

In Fig. 4 ist der Staukörper 25 mit seiner Lage oberhalb der Förderschnecke 12 dargestellt. Der Staukörper 25 besteht aus zwei länglichen, im Winkel von 70° dachförmig verschweißten Blechen, die mit Streben 26, 27 am Behälter befestigt sind.

Um ein Gleiten des Schüttguts im Behälter zur ersten Schnecke hin zu gewährleisten, sollten die Behälterwände vorzugsweise in einem Winkel von maximal 52 bis 55° zueinander stehen. Bei einem größeren Winkel wird die Gefahr zu groß, daß ein Teil des Schüttguts an den Behälterwänden haften bleibt.

## Patentansprüche

1. Behälter (10) für Schüttgüter und zähflüssige Güter mit einem im unteren Bereich im wesentlichen V-förmigen Querschnitt, einer ersten Fördereinrichtung (12) am Boden (11) des Behälters (10), um das Gut auf eine Behälterseite (13) zu fördern, und einer zweiten Fördereinrichtung (14) auf dieser Behälterseite (13), um das Gut zu einem weiter oben gelegenen Auslaß (15) zu fördern, dadurch gekennzeichnet, daß die erste Fördereinrichtung (12) eine geringere Förderleistung hat als die zweite Fördereinrichtung (14), und daß der Behälter im Inneren im wesentlichen senkrechte Platten (19.1 bis 19.7) aufweist.

2. Behälter (10) nach Anspruch 1, dadurch gekennzeichnet, daß die Fördereinrichtungen Förderschnecken aufweisen.

3. Behälter (10) nach Anspruch 1 oder 2, dadurch gekennzeichnet, daß oberhalb der ersten Fördereinrichtung (12) ein Staukörper (25) vorgesehen ist.

4. Behälter (10) nach einem der Ansprüche 1 bis 3, dadurch gekennzeichnet, daß der Behälter (10) an seiner Oberseite mehrere Öffnungen (18.1, 18.2, 18.3) zum Befüllen des Behälters aufweist.

5. Behälter (10) nach einem der Ansprüche 1 bis 4, dadurch gekennzeichnet, daß der Behälter (10) einen Rahmen (20) mit Befestigungsvorrichtungen (21.1, 21.2, 22) für den Transport aufweist.

6. Behälter (10) nach Anspruch 5, dadurch gekennzeichnet, daß der Rahmen (20) in seinem unteren Bereich eine oder mehrere Rollen (23.1, 23.2) aufweist.

## Claims

1. Container (10) for bulk materials and viscous materials, having a lower region of substantially V-shaped cross-section, a first conveying mechanism (12) on the floor (11) of the container (10) in order to convey the material to one side (13) of the container, and a second conveying mechanism (14) on said container side (13) in order to convey the material to an outlet (15) situated higher up, characterised in that the first conveying mechanism (12) has a lesser conveying capacity than the second conveying mechanism (14), and that on the inside the container has substantially vertical panels (19.1 to 19.7).

2. Container (10) according to claim 1, characterized in that the conveying mechanisms incorporate conveyor worms.

3. Container (10) according to claim 1 or 2, characterised in that above the first conveying mechanism (12) there is provided a baffle (25).

4. Container (10) according to any of claims 1 to 3, characterised in that on its upper face the container (10) has a plurality of openings (18.1, 18.2, 18.3) for filling the container.

5. Container (10) according to any of claims 1 to 4, characterised in that for transportation the container (10) has a frame (20) with fixing devices (21.1, 21.2, 22).

6. Container (10) according to claim 5, characterised in that in its lower region the frame (20) has one or more rollers (23.1, 23.2).

## Revendications

1. Conteneur (10) pour matières en vrac et matières visqueuses, avec une section transversale sensiblement en forme de V dans la zone inférieure, un premier dispositif de convoyage (12) au niveau du fond (11) du conteneur (10) pour amener la matière vers un côté de conteneur (13), et avec un deuxième dispositif de convoyage (14) sur ledit côté de conteneur (13) pour amener la matière vers une sortie (15) située plus en hauteur, caractérisé en ce que le premier dispositif de convoyage (12) possède une capacité de transport inférieure à celle du deuxième dispositif de convoyage (14), et en ce que le conteneur comporte, à l'intérieur, des plaques sensiblement verticales (19.1 à 19.7).

2. Conteneur (10) selon la revendication 1, caractérisé en ce que les dispositifs de convoyage comportent des vis convoyeuses.

3. Conteneur (10) selon la revendication 1 ou 2, caractérisé en ce qu'au-dessus du premier dispositif de convoyage (12) est prévu un corps de retenue (25).

4. Conteneur (10) selon l'une des revendications 1 à 3, caractérisé en ce que le conteneur (10) comporte, en partie supérieure, plusieurs ouvertures (18.1, 18.2, 18.3) de remplissage du conteneur.

5. Conteneur (10) selon l'une des revendications 1 à 4, caractérisé en ce que le conteneur (10) comporte un châssis (20) avec des dispositifs de fixation (21.1, 21.2, 22) pour le transport.

6. Conteneur (10) selon la revendication 5, caractérisé en ce que le châssis (20) comporte, dans sa zone inférieure, un ou plusieurs galets de roulement (23.1, 23.2).
